# EUROPEAN PATENT APPLICATION

(11) **EP 4 679 617 A1**
(43) Date of publication of application: **14.01.2026**
(21) Application number: 23926458.3
(22) Date of filing: 14.12.2023
(51) Int. Cl.: H01M 50/569, H01M 50/209, H01M 50/298

(54) **VOLTAGE DETECTION DEVICE AND BATTERY MODULE**

(30) Priority: 03.03.2023 JP 2023032868
(71) Applicant: AESC Japan Ltd., Yokohama-Shi, Kanagawa 220-0012 (JP)
(72) Inventor: IZAWA, Takami, Zama-shi, Kanagawa 252-0012 (JP); NAKAGAWA, Fumiya, Zama-shi, Kanagawa 252-0012 (JP)
(74) Representative: Mathys & Squire
(86) International application number: PCT/JP2023/044795
(87) International publication number: WO 2024/185254

(57) **Abstract**

A voltage detection device (20A) includes a plurality of voltage detection terminals (210) and a plurality of voltage detection lines (220) electrically connected to the plurality of voltage detection terminals (210). The voltage detection lines (220) electrically connected to adjacent voltage detection terminals (210) are drawn through a region between the adjacent voltage detection terminals (210).

## Description

### TECHNICAL FIELD

The present invention relates to a voltage detection device and a battery module.

### BACKGROUND ART

In recent years, a battery module including a plurality of battery cells stacked in a predetermined direction has been developed. The plurality of battery cells is electrically connected to each other via a tab drawn from each battery cell.

Patent Document 1 describes one example of a battery module including a voltage detection device. The voltage detection device includes a bus bar electrically connected to a tab drawn from a battery cell. The bus bar has a terminal for voltage sensing. A wire is electrically connected to the terminal for voltage sensing.

Patent Document 2 describes one example of a battery module. The battery module includes a bus bar located in front of a plurality of battery cells. A tab of the battery cell is mounted to the bus bar.

### RELATED DOCUMENT

### PATENT DOCUMENT

Patent Document 1: Japanese Patent Application Publication (Translation of PCT Application) No. 2014-516457
Patent Document 2: Japanese Patent Application Publication No. 2020-524375

### DISCLOSURE OF THE INVENTION

### TECHNICAL PROBLEM

The voltage of each of a plurality of tabs of a plurality of battery cells may be detected by each of a plurality of voltage detection terminals. A voltage detection line such as a harness is electrically connected to each voltage detection terminal. Each voltage detection line may be drawn through the lateral region of each voltage detection terminal. However, the voltage detection device can increase in size when all the voltage detection lines are drawn through the same side region of each voltage detection terminal.

An example of the object of the present invention is to decrease the voltage detection device in size. Other objects of the present invention will become apparent from the description of the present specification.

### SOLUTION TO PROBLEM

An aspect of the present invention is as follows.
[1] A voltage detection device including:
   a plurality of voltage detection terminals; and
   a plurality of voltage detection lines electrically connected to the plurality of voltage detection terminals, wherein
   the voltage detection lines electrically connected to adjacent voltage detection terminals are drawn through a region between the adjacent voltage detection terminals.
[2] The voltage detection device according to [1], wherein
   the voltage detection lines electrically connected to the voltage detection terminals located on opposite sides of a predetermined region are drawn through a region opposite the predetermined region with respect to the voltage detection terminals.
[3] The voltage detection device according to [1] or [2], further including
   a holding body holding the plurality of voltage detection terminals, wherein
   the voltage detection lines electrically connected to adjacent voltage detection terminals are drawn through regions on opposite sides of the holding body.
[4] The voltage detection device according to any one of [1] to [3], wherein
   the voltage detection lines electrically connected to adjacent voltage detection terminals are drawn from portions of the voltage detection terminals displaced from each other in a draw direction of the voltage detection lines.
[5] A voltage detection device including:
   a holding body;
   a plurality of voltage detection terminals held by the holding body; and
   a plurality of voltage detection lines electrically connected to the plurality of voltage detection terminals, wherein
   at least two voltage detection lines are drawn through regions on opposite sides of the holding body.
[6] The voltage detection device according to [5], wherein
   the holding body defines a space for the voltage detection line to pass through the holding body between regions on opposite sides of the holding body.
[7] A battery module including:
   a plurality of battery cells; and
   the voltage detection device according to any one of [1] to [6] to detect voltage of the plurality of battery cells.

### ADVANTAGEOUS EFFECTS OF INVENTION

According to the above aspect of the present invention, the voltage detection device can be decreased in size.

### BRIEF DESCRIPTION OF THE DRAWINGS

[Fig. 1] A perspective view of a battery module according to a first embodiment.
[Fig. 2] A front view of a portion of the battery module according to the first embodiment.
[Fig. 3] A front view of a portion of a battery module according to a second embodiment.
[Fig. 4] A front view of a portion of a battery module according to a third embodiment.
[Fig. 5] A front view of a portion of a battery module according to a fourth embodiment.
[Fig. 6] A front view of a portion of a battery module according to a fifth embodiment.

### DESCRIPTION OF EMBODIMENTS

Hereinafter, embodiments of the present invention are described using the drawings. **In** all the drawings, the similar component is assigned with the similar reference sign, and description thereof is omitted as appropriate.

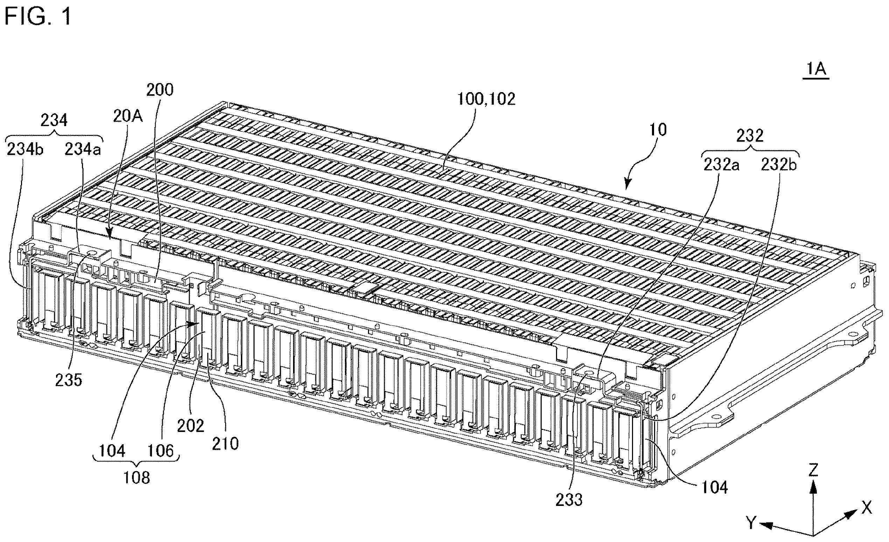

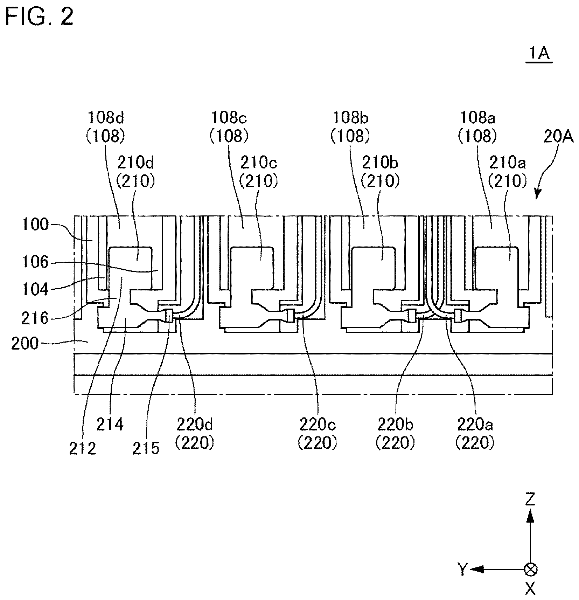

Fig. 1 is a perspective view of a battery module 1A according to a first embodiment. Fig. 2 is a front view of a portion of the battery module 1A according to the first embodiment.

In each figure, the arrows indicating the X direction, the Y direction, and the Z direction are shown for description. Hereinafter, unless otherwise specified, the tip end side of the arrow indicating the X direction is the rear side of the battery module 1A and the base end side of the arrow indicating the X direction is the front side of the battery module 1A. The Y direction is orthogonal to the X direction. The Y direction is a left-right direction of the battery module 1A. Hereinafter, unless otherwise specified, the tip end side of the arrow indicating the Y direction is the left side of the battery module 1A and the base end side of the arrow indicating the Y direction is the right side of the battery module 1A. The Z direction is orthogonal to both the X direction and the Y direction. The Z direction indicates an upward-downward direction of the battery module 1A. Hereinafter, unless otherwise specified, the tip end side of the arrow indicating the Z direction is the upper side of the battery module 1A and a the end side of the arrow indicating the Z direction is the lower side of the battery module 1A. Hereinafter, according to necessity, the direction perpendicular to the X direction is referred to as a YZ plane direction, the direction perpendicular to the Y direction is referred to as a ZX plane direction, and the direction perpendicular to the Z direction is referred to as an XY plane direction. The relationship between each of the X direction, the Y direction, and the Z direction, and each of the front-rear direction, the left-right direction, and the upward-downward direction of the battery module 1A is not limited to the example described above.

The structure of the battery module 1A is described with reference to Fig. 1 and, if necessary, Fig. 2.

The battery module 1A includes a cell stack 10 and a voltage detection device 20A. The cell stack 10 includes a plurality of battery cells 100. The voltage detection device 20A detects voltage of the plurality of battery cells 100. The voltage detection device 20A includes a holding body 200, a plurality of voltage detection terminals 210, a plurality of voltage detection lines 220, a positive electrode bus bar 232, and a negative electrode bus bar 234. **In** Fig. 1, for description, the plurality of voltage detection lines 220 illustrated in Fig. 2 is removed.

The plurality of battery cells 100 is stacked in the Y direction. The longitudinal direction of each battery cell 100 is substantially parallel to the X direction. The lateral direction of each battery cell 100 is substantially parallel to the Z direction. The thickness direction of each battery cell 100 is substantially parallel to the Y direction. The shape of each battery cell 100 is not limited to this example.

Each battery cell 100 includes a non-illustrated battery element, an exterior member 102, a positive electrode tab 104, and a negative electrode tab 106. **In** one example, the battery element includes a plurality of positive electrodes and a plurality of negative electrodes, not illustrated, alternately stacked in the Y direction and a separator, not illustrated, located between the positive electrode and the negative electrode adjacent in the Y direction. The exterior member 102 seals the battery element and a electrolytic liquid not illustrated. The positive electrode tab 104 is electrically connected to the positive electrode of the battery element. The positive electrode tab 104 is drawn from one of opposite sides of the exterior member 102 in the X direction. The negative electrode tab 106 is electrically connected to the negative electrode of the battery element. The negative electrode tab 106 is drawn from the other of opposite sides of the exterior member 102 in the X direction. However, the structure of each battery cell 100 is not limited to this example.

Each battery cell 100 may be a solid-state battery. In the solid-state battery, a solid electrolyte layer is provided in a portion corresponding to the separator. The solid-state battery does not include an electrolytic liquid. Hereinafter, unless otherwise specified, each battery cell 100 is described as a battery cell including the electrolytic liquid.

In the first embodiment, the plurality of battery cells 100 is electrically connected by a combination of serial and parallel. Specifically, a cell group including at least the two battery cells 100 adjacent to each other in the Y direction and connected in parallel is stacked in the Y direction and connected in series. In front of the cell stack 10, the positive electrode tab 104 drawn from the battery cell 100 of a cell group connected in parallel and the negative electrode tab 106 drawn from the battery cell 100 of another cell group connected in parallel are electrically connected to each other to form a tab connection portion 108 including the positive electrode tab 104 and the tab connection portion 108. The positive electrode tab 104 and the tab connection portion 108 in the tab connection portion 108 are joined to each other by laser welding, for example. Behind the cell stack 10, a tab group is formed in the same way. Thus, a plurality of cell groups is connected in series from the cell group located on one end side of the cell stack 10 in the Y direction to the cell group located on the other end side of the cell stack 10 in the Y direction.

The electric connection of the plurality of battery cells 100 is not limited to the example described above. For example, the cell stack 10 may be configured by connecting the single battery cells 100 in series.

The holding body 200 is arranged in front of the cell stack 10. The holding body 200 defines a plurality of openings 202. Each of the plurality of tab connection portions 108 is exposed forward via each of the plurality of openings 202. The holding body 200 integrally holds the plurality of voltage detection terminals 210 and the plurality of voltage detection lines 220. Thus, each of the plurality of voltage detection terminals 210 can be arranged at an appropriate position relative to each of the plurality of tab connection portions 108 by installing the holding body 200 at an appropriate position relative to the cell stack 10.

As illustrated in Fig. 2, each voltage detection terminal 210 includes a tip end portion 212, a base end portion 214, and a connection portion 216. The rear surface of each tip end portion 212 and the front surface of the lower end portion of each tab connection portion 108 are joined to each other by a joining method such as laser welding. Thus, each voltage detection terminal 210 and each tab connection portion 108 are electrically connected to each other. As a result, each voltage detection terminal 210 can detect the voltage of each tab connection portion 108. Each tip end portion 212 and each base end portion 214 are electrically connected to each other via each connection portion 216. Each base end portion 214 is located below each tip end portion 212. At least a portion of each base end portion 214 is located below each tab connection portion 108. Each base end portion 214 and the holding body 200 are mechanically connected. Thus, each voltage detection terminal 210 is fixed to the holding body 200. A draw portion 215 is provided at the Y direction end of each base end portion 214. Each voltage detection line 220 is drawn from the draw portion 215. Each drawing portion 215 and one end of each voltage detection terminal 210 are connected to each other by a connection method such as crimping. Thus, each voltage detection terminal 210 and each voltage detection line 220 are electrically connected to each other. Each voltage detection line 220 is drawn upward from the draw portion 215. In other words, the plurality of voltage detection lines 220 is routed via the holding body 200. The other end of each voltage detection line 220 is electrically connected to a connector, not illustrated, arranged at the upper portion of the holding body 200. The connection portion 216 is located between the tip end portion 212 and the base end portion 214 in the Z direction. The width of the connection portion 216 in the Y direction is narrower than both the width of the tip end portion 212 in the Y direction and the width of the base end portion 214 in the Y direction. In the first embodiment, the lengths of the respective connection portions 216 in the Z direction are substantially equal.

The routing of each voltage detection line 220 is not limited to the routing according to the first embodiment. For example, each tip end portion 212 may be electrically connected to the upper end portion of each tab connection portion 108. In this example, each base end portion 214 is drawn upward from each tip end portion 212. At least a portion of each base end portion 214 is located above each tab connection portion 108. Each draw portion 215 and one end of each voltage detection terminal 210 are connected to each other by a connection method such as crimping. Each voltage detection line 220 is drawn downward from the draw portion 215. The other end of each voltage detection line 220 is electrically connected to a connector, not illustrated, arranged at the lower portion of the holding body 200.

The positive electrode bus bar 232 is arranged at the right end portion of the holding body 200. The positive electrode bus bar 232 includes a first extension portion 232a and a second extension portion 232b. The first extension portion 232a extends substantially parallel to the Y direction except for the substantially central portion of the first extension portion 232a in the Y direction. The substantially central portion of the first extension portion 232a in the Y direction is provided with a step in the Z direction. Thus, the left portion of the first extension portion 232a is located higher than the right portion of the first extension portion 232a. The second extension portion 232b extends downward from the right end portion of the first extension portion 232a substantially parallel to the Z direction. The second extension portion 232b and the positive electrode tab 104 drawn from the cell group located at the right end portion of the cell stack 10 are joined to each other by a joining method such as laser welding.

The positive electrode bus bar 232 functions as an external terminal for electrically connecting to an external device such as another battery module. Specifically, the left end portion of the first extension portion 232a defines a first fastening hole 233. A fastener not illustrated is capable of being fastened to the first fastening hole 233. The positive electrode bus bar 232 and a connection terminal not illustrated for connecting to an external device can be fastened to each other by the fastener.

The negative electrode bus bar 234 is arranged at the left end portion of the holding body 200. The negative electrode bus bar 234 includes a third extension portion 234a and a fourth extension portion 234b. The third extension portion 234a extends substantially parallel to the Y direction except for the substantially central portion of the third extension portion 234a in the Y direction. The substantially central portion of the third extension portion 234a in the Y direction is provided with a step in the Z direction. Thus, the right portion of the third extension portion 234a is located higher than the left portion of the third extension portion 234a. The fourth extension portion 234b extends downward from the left end portion of the third extension portion 234a substantially parallel to the Z direction. The fourth extension portion 234b and the negative electrode tab 106 drawn from the cell group located at the left end portion of the cell stack 10 are joined to each other by a joining method such as laser welding.

The negative electrode bus bar 234 functions as an external terminal for electrically connecting to an external device such as another battery module in the same way as the positive electrode bus bar 232. The right end portion of the third extension portion 234a defines a second fastening hole 235 in the same way as the first extension portion 232a.

A voltage detection device, similar to the voltage detection device 20A, is provided behind the cell stack 10; however, the voltage detection device is not provided with the positive electrode bus bar 232 and the negative electrode bus bar 234. Thus, the voltage of a plurality of tab connection portions behind the cell stack 10 can be detected.

In the first embodiment, the terminal positive electrode tab 104 of the plurality of cell groups connected in series is the positive electrode tab 104 drawn forward from the battery cell 100 of the cell group located on the right end side of the cell stack 10, and the terminal negative electrode tab 106 of the plurality of cell groups connected in series is the negative electrode tab 106 drawn forward from the battery cell 100 of the cell group located on the left end side of the cell stack 10. Thus, both the positive electrode bus bar 232 and the negative electrode bus bar 234 are arranged in front of the battery cell 100. However, the arrangement of the terminal positive electrode tab 104 and the negative electrode tab 106 of the plurality of cell groups connected in series may differ depending on the number of the battery cells 100 included in the cell stack 10. For example, consider the case where the terminal positive electrode tab 104 of the plurality of cell groups connected in series is the positive electrode tab 104 drawn rearward from the battery cell 100 of the cell group located on the right end side of the cell stack 10 and the terminal negative electrode tab 106 of the plurality of cell groups connected in series is the negative electrode tab 106 drawn forward from the battery cell 100 of the cell group located on the left end side of the cell stack 10. In this case, the positive electrode bus bar 232 is arranged behind the cell stack 10 and the negative electrode bus bar 234 is arranged in front of the cell stack 10.

The details of routing of the plurality of voltage detection lines 220 are described with reference to Fig. 2. Fig. 2 illustrates the four tab connection portions 108 adjacent in the Y direction and the four voltage detection terminals 210 adjacent in the Y direction.

Hereinafter, according to necessity, in Fig. 2, the first tab connection portion 108, the voltage detection terminal 210, and the voltage detection line 220 from right, the second tab connection portion 108, the voltage detection terminal 210, and the voltage detection line 220 from right, the third tab connection portion 108, the voltage detection terminal 210, and the voltage detection line 220 from right, and the fourth tab connection portion 108, the voltage detection terminal 210, and the voltage detection line 220 from right are referred to as a first tab connection portion 108a, a first voltage detection terminal 210a, and a first voltage detection line 220a, a second tab connection portion 108b, a second voltage detection terminal 210b, and a second voltage detection line 220b, a third tab connection portion 108c, a third voltage detection terminal 210c, and a third voltage detection line 220c, and a fourth tab connection portion 108d, a fourth voltage detection terminal 210d, and a fourth voltage detection line 220d, respectively.

In the first embodiment, the first voltage detection line 220a and the second voltage detection line 220b are drawn upward through the region between the first voltage detection terminal 210a and the second voltage detection terminal 210b. For example, consider the case where the first voltage detection line 220a is drawn through the region opposite the second voltage detection terminal 210b with respect to the first voltage detection terminal 210a. Specifically, consider the case where the first voltage detection line 220a is drawn through the region to the right of the first voltage detection terminal 210a. **In** this case, the structure such as a groove is necessary on the right side for the first voltage detection terminal 210a to draw the first voltage detection terminal 210a. In the first embodiment, on the other hand, there is no need to provide such a structure. In the first embodiment, therefore, the voltage detection device 20A can be decreased in size compared to the case where the first voltage detection line 220a is drawn through the region to the right of the first voltage detection terminal 210a.

Each voltage detection terminal 210 may be movably fixed to the holding body 200. For example, each voltage detection terminal 210 may be rotatable at a certain angle around a rotation axis substantially parallel to at least one of the X direction, the Y direction, and the Z direction. In this case, each voltage detection terminal 210 may be locked by a locking portion not illustrated with a predetermined angle of rotation around a predetermined rotation axis. In this case, the orientation of the voltage detection terminal 210 can be adjusted by the locking portion. The position of the draw portion 215 can be adjusted by adjusting the orientation of the voltage detection terminal 210. Thus, adjusting the position of the draw portion 215 can reduce interference of the voltage detection lines 220 drawn through the region between voltage detection terminals 210 adjacent in the Y direction.

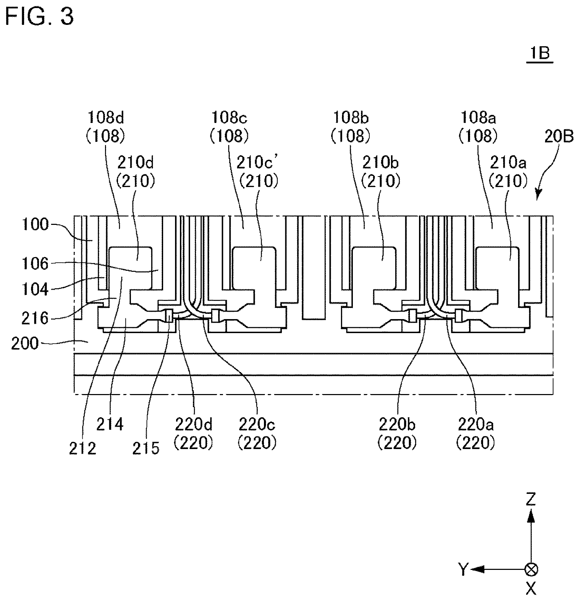

Fig. 3 is a front view of a portion of a battery module 1B according to a second embodiment. The battery module 1B and a voltage detection device 20B according to the second embodiment are the same as the battery module 1A and the voltage detection device 20A according to the first embodiment respectively except for the following point.

As viewed from the front, the shape of a third voltage detection terminal 210c' according to the second embodiment and the shape of the third voltage detection terminal 210c according to the first embodiment are inverted left to right. In the second embodiment, therefore, the third voltage detection line 220c is drawn upward through the region between the third voltage detection terminal 210c' and the fourth voltage detection line 220d. In other words, the third voltage detection line 220c is drawn upward through the region opposite the second voltage detection terminal 210b with respect to the third voltage detection terminal 210c'. As in the first embodiment, the second voltage detection line 220b is drawn upward through the region between the first voltage detection terminal 210a and the second voltage detection terminal 210b. In other words, the second voltage detection line 220b is drawn upward through the region opposite the third voltage detection terminal 210c' with respect to the second voltage detection terminal 210b. As a result, there is a region between the second tab connection portion 108b and the third tab connection portion 108c where no voltage detection line is drawn.

There is no need to route a voltage detection line in the region between the second tab connection portion 108b and the third tab connection portion 108c. As a result, the width in the Y direction of the region between the second tab connection portion 108b and the third tab connection portion 108c can be narrower than the width in the Y direction between other tab connection portions. In the second embodiment, therefore, the voltage detection device 20B can be decreased in size in the Y direction. In addition, there is no need to form a groove in the region between the second tab connection portion 108b and the third tab connection portion 108c to draw a voltage detection line. As a result, the strength of the holding body 200 can be improved compared to the case where the groove is formed.

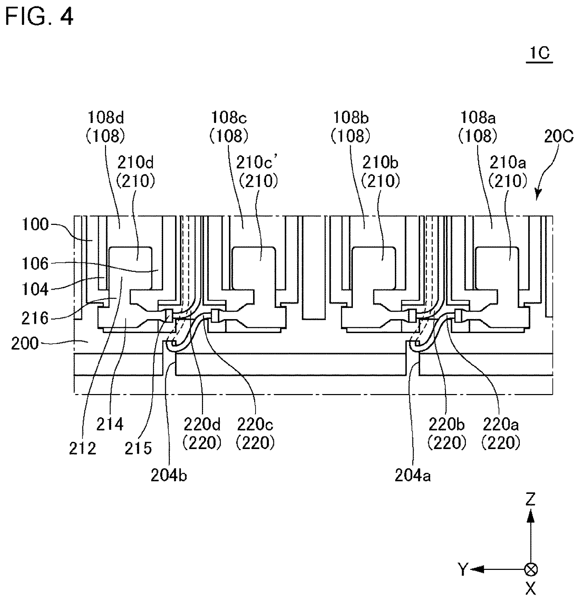

Fig. 4 is a front view of a portion of a battery module 1C according to a third embodiment. The battery module 1C and a voltage detection device 20C according to the third embodiment are the same as the battery module 1B and the voltage detection device 20B according to the second embodiment respectively except for the following point.

**In** the third embodiment, the first voltage detection line 220a passes through the holding body 200 from the front to the rear of the holding body 200 through a first notch 204a defined at the lower end of the holding body 200. Thus, the first voltage detection line 220a is drawn upward behind the holding body 200. The second voltage detection line 220b, on the other hand, does not pass through the holding body 200 from the front to the rear of the holding body 200 and is drawn upward through the region between the first voltage detection terminal 210a and the second voltage detection terminal 210b in front of the holding body 200. Thus, the first voltage detection line 220a and the second voltage detection line 220b can be less likely to interfere than when both the first voltage detection line 220a and the second voltage detection line 220b are drawn upward in front of or behind the holding body 200.

When both the first voltage detection line 220a and the second voltage detection line 220b are drawn upward in front of or behind the holding body 200, the narrower the distance between the first voltage detection terminal 210a and the second voltage detection terminal 210b in the Y direction is, the more the first voltage detection line 220a and the second voltage detection line 220b are likely to interfere. In the third embodiment, however, the first voltage detection line 220a and the second voltage detection line 220b can be less likely to interfere even if the distance between the first voltage detection terminal 210a and the second voltage detection terminal 210b in the Y direction is narrow. In other words, in the third embodiment, the plurality of voltage detection terminals 210 including the first voltage detection terminal 210a and the second voltage detection terminal 210b can be arranged at a narrower pitch in the Y direction, rather than when both the first voltage detection line 220a and the second voltage detection line 220b are drawn upward in front of or behind the holding body 200.

In the third embodiment, the third voltage detection line 220c passes through the holding body 200 from the front to the rear of the holding body 200 through a second notch 204b defined at the lower end of the holding body 200. Thus, the third voltage detection line 220c is drawn upward behind the holding body 200. The fourth voltage detection line 220d, on the other hand, does not pass through the holding body 200 from the front to the rear of the holding body 200 and is drawn upward through the region between the third voltage detection terminal 210c' and the fourth voltage detection terminal 210d in front of the holding body 200. Thus, the third voltage detection line 220c and the fourth voltage detection line 220d can be less likely to interfere than when both the third voltage detection line 220c and the fourth voltage detection line 220d are drawn upward in front of or behind the holding body 200. In addition, the plurality of voltage detection terminals 210 including the third voltage detection terminal 210c' and the fourth voltage detection terminal 210d can be arranged at a narrower pitch in the Y direction, rather than when both the third voltage detection line 220c and the fourth voltage detection line 220d are drawn upward in front or behind the holding body 200.

The structure for the first voltage detection line 220a to pass through the holding body 200 from the front to the rear of the holding body 200 is not limited to the structure according to third embodiment. For example, the first voltage detection line 220a may pass through the holding body 200 from the front to the rear of the holding body 200 through a through-hole provided in the holding body 200. In other words, the holding body 200 may define a space for the first voltage detection line 220a to pass through the holding body 200 from the front to the rear of the holding body 200. The same applies to the third voltage detection line 220c.

In the third embodiment, the two voltage detection lines drawn through the region between voltage detection terminals on one side adjacent in the Y direction are drawn upward through regions on opposite sides of the holding body 200 in the X direction. However, at least two of the voltage detection lines 220 may be drawn upward through regions on opposite sides of the holding body 200 in the X direction regardless of whether each voltage detection line 220 is drawn rightward or leftward from the voltage detection terminals 210. In this example, the plurality of voltage detection lines 220 can be also less likely to interfere than when the plurality of voltage detection lines 220 is routed using only the front region or only the rear region of the holding body 200.

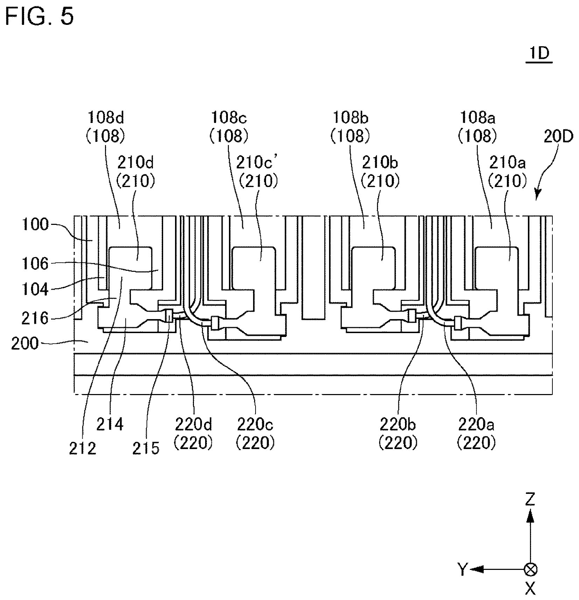

Fig. 5 is a front view of a portion of a battery module 1D according to a fourth embodiment. The battery module 1D and a voltage detection device 20D according to the fourth embodiment are the same as the battery module 1B and the voltage detection device 20B according to the second embodiment respectively except for the following point.

In the fourth embodiment, the position of the draw portion 215 of the first voltage detection terminal 210a in the Z direction and the position of the draw portion 215 of the second voltage detection terminal 210b are displaced from each other in the Z direction. In other words, the position of the draw portion 215 of the first voltage detection terminal 210a in the Z direction and the position of the draw portion 215 of the second voltage detection terminal 210b in the Z direction are displaced from each other in the draw direction of the first voltage detection line 220a and the second voltage detection line 220b. Specifically, the position of the draw portion 215 of the second voltage detection terminal 210b in the Z direction is located higher than the position of the draw portion 215 of the first voltage detection terminal 210a in the Z direction. As a result, the first voltage detection line 220a and the second voltage detection line 220b can be less likely to interfere between the first voltage detection terminal 210a and the second voltage detection terminal 210b, rather than when the position of the draw portion 215 of the first voltage detection terminal 210a in the Z direction and the position of the draw portion 215 of the second voltage detection terminal 210b in the Z direction are aligned in the Z direction.

When the position of the draw portion 215 of the first voltage detection terminal 210a in the Z direction and the position of the draw portion 215 of the second voltage detection terminal 210b in the Z direction are aligned in the Z direction, the narrower the distance between the first voltage detection terminal 210a and the second voltage detection terminal 210b in the Y direction is, the more the first voltage detection line 220a and the second voltage detection line 220b are likely to interfere with each other. In the fourth embodiment, however, the first voltage detection line 220a and the second voltage detection line 220b can be less likely to interfere even if the distance between the first voltage detection terminal 210a and the second voltage detection terminal 210b in the Y direction is narrow. In other words, in the fourth embodiment, the plurality of voltage detection terminals 210 including the first voltage detection terminal 210a and the second voltage detection terminal 210b can be arranged at a narrower pitch in the Y direction, rather than when the position of the draw portion 215 of the first voltage detection terminal 210a in the Z direction and the position of the draw portion 215 of the second voltage detection terminal 210b in the Z direction are aligned in the Z direction.

In the fourth embodiment, the position of the draw portion 215 of the third voltage detection terminal 210c' in the Z direction and the position of the draw portion 215 of the fourth voltage detection terminal 210d in the Z direction are also displaced from each other in the Z direction. As a result, the third voltage detection line 220c and the fourth voltage detection line 220d can be less likely to interface between the third voltage detection terminal 210c' and the fourth voltage detection terminal 210d, rather than when the position of the draw portion 215 of the third voltage detection terminal 210c' in the Z direction and the position of the draw portion 215 of the fourth voltage detection terminal 210d in the Z direction are aligned in the Z direction. In addition, the plurality of voltage detection terminals 210 including the third voltage detection terminal 210c' and the fourth voltage detection terminal 210d can be arranged at a narrower pitch in the Y direction, rather than when the position of the draw portion 215 of the third voltage detection terminal 210c' in the Z direction and the position of the draw portion 215 of the fourth voltage detection terminal 210d in the Z direction are aligned in the Z direction.

In the fourth embodiment, the position of the tip end portion 212 of the first voltage detection terminal 210a in the Z direction and the position of the tip end portion 212 of the second voltage detection terminal 210b in the Z direction are aligned in the Z direction. As viewed from the X direction, the shape of the base end portion 214 of the first voltage detection terminal 210a and the shape of the base end portion 214 of the second voltage detection terminal 210b are substantially symmetrical. The length of the connection portion 216 of the first voltage detection terminal 210a in the Z direction and the length of the connection portion 216 of the second voltage detection terminal 210b in the Z direction, on the other hand, are different from each other. Specifically, the length of the connection portion 216 of the second voltage detection terminal 210b in the Z direction is shorter than the length of the connection portion 216 of the first voltage detection terminal 210a in the Z direction. Thus, the position of the draw portion 215 of the first voltage detection terminal 210a in the Z direction and the position of the draw portion 215 of the second voltage detection terminal 210b are displaced from each other in the Z direction. However, the position of the draw portion 215 of the first voltage detection terminal 210a in the Z direction and the position of the draw portion 215 of the second voltage detection terminal 210b may be displaced from each other in the Z direction by shifting the position of the tip end portion 212 of the first voltage detection terminal 210a in the Z direction and the position of the tip end portion 212 of the second voltage detection terminal 210b in the Z direction from each other in the Z direction while the length of the connection portion 216 of the first voltage detection terminal 210a in the Z direction and the length of the connection portion 216 of the second voltage detection terminal 210b in the Z direction are substantially equal. The same also applies to the relationship between the position of the tip end portion 212 of the third voltage detection terminal 210c' in the Z direction and the position of the tip end portion 212 of the fourth voltage detection terminal 210d in the Z direction.

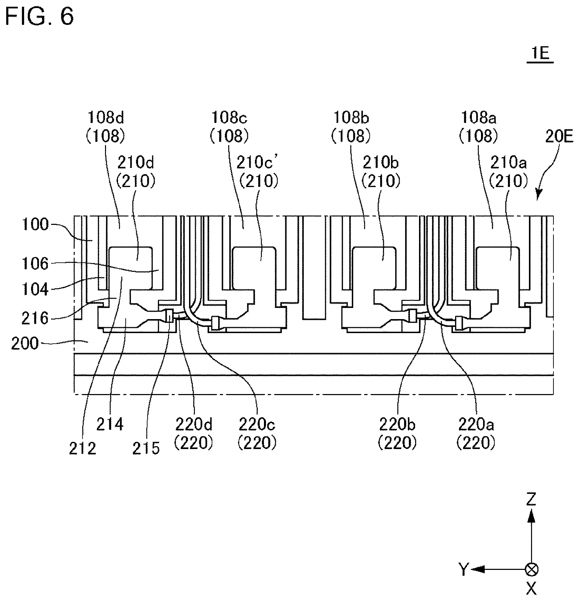

Fig. 6 is a front view of a portion of a battery module 1E according to a fifth embodiment. The battery module 1E and a voltage detection device 20E according to the fifth embodiment are the same as the battery module 1D and the voltage detection device 20D according to the fourth embodiment respectively except for the following point.

In the fifth embodiment, the position of the draw portion 215 of the first voltage detection terminal 210a in the Z direction and the position of the draw portion 215 of the second voltage detection terminal 210b are also displaced from each other in the Z direction as in the fourth embodiment. In the fifth embodiment, however, the length of the connection portion 216 of the first voltage detection terminal 210a in the Z direction and the length of the connection portion 216 of the second voltage detection terminal 210b in the Z direction are substantially equal. In the fifth embodiment, the shape of the base end portion 214 of the first voltage detection terminal 210a and the shape of the base end portion 214 of the second voltage detection terminal 210b, on the other hand, are asymmetrical as viewed from the X direction. Specifically, the draw portion 215 of the second voltage detection terminal 210b is located on the right side of the substantially central portion of the base end portion 214 of the second voltage detection terminal 210b in the Z direction. The draw portion 215 of the first voltage detection terminal 210a, on the other hand, is located on the left side of the lower end portion of the base end portion 214 of the first voltage detection terminal 210a in the Z direction. As a result, the position of the draw portion 215 of the second voltage detection terminal 210b in the Z direction is located higher than the position of the draw portion 215 of the first voltage detection terminal 210a in the Z direction.

In the fifth embodiment, the first voltage detection line 220a and the second voltage detection line 220b can be also less likely to interfere between the first voltage detection terminal 210a and the second voltage detection terminal 210b as in the fourth embodiment, rather than when the position of the draw portion 215 of the first voltage detection terminal 210a in the Z direction and the position of the draw portion 215 of the second voltage detection terminal 210b in the Z direction are aligned in the Z direction.

The descriptions of the first voltage detection terminal 210a and the second voltage detection terminal 210b according to the fifth embodiment also apply to the third voltage detection terminal 210c' and the fourth voltage detection terminal 210d according to the fifth embodiment.

The embodiments according to the present invention have been described above with reference to the drawings, but these are exemplifications of the present invention and various configurations other than those described above may be adopted.

This application claims priority based on Japanese patent application No. 2023-032868, filed on March 3, 2023, the disclosure of which is incorporated herein in its entirety by reference.

### REFERENCE SIGNS LIST

1A, 1B, 1C, 1D, 1E Battery module, 10 Cell stack, 20A, 20B, 20C, 20D, 20E Voltage detection device, 100 Battery cell, 102 Exterior member, 104 Positive electrode tab, 106 Negative electrode tab, 108 Tab connection portion, 108a First tab connection portion, 108b Second tab connection portion, 108c Third tab connection portion, 108d Fourth tab connection portion, 200 Holding body, 202 Opening, 204a First notch, 204b Second notch, 210 Voltage detection terminal, 210a First voltage detection terminal, 210b Second voltage detection terminal, 210c Third voltage detection terminal, 210d Fourth voltage detection terminal, 212 Tip end portion, 214 Base end portion, 215 Draw portion, 216 Connection portion, 220 Voltage detection line, 220a First voltage detection line, 220b Second voltage detection line, 220c Third voltage detection line, 220d Fourth voltage detection line, 232 Positive electrode bus bar, 232a First extension portion, 232b Second extension portion, 233 First fastening hole, 234 Negative electrode bus bar, 234a Third extension portion, 234b Fourth extension portion, 235 Second fastening hole

## Claims

1. A voltage detection device comprising:
a plurality of voltage detection terminals; and
a plurality of voltage detection lines electrically connected to the plurality of voltage detection terminals, wherein
the voltage detection lines electrically connected to adjacent voltage detection terminals are drawn through a region between the adjacent voltage detection terminals.

2. The voltage detection device according to claim 1, wherein
the voltage detection lines electrically connected to the voltage detection terminals located on opposite sides of a predetermined region are drawn through a region opposite the predetermined region with respect to the voltage detection terminals.

3. The voltage detection device according to claim 1, further comprising
a holding body holding the plurality of voltage detection terminals, wherein
the voltage detection lines electrically connected to adjacent voltage detection terminals are drawn through regions on opposite sides of the holding body.

4. The voltage detection device according to claim 1, wherein
the voltage detection lines electrically connected to adjacent voltage detection terminals are drawn from portions of the voltage detection terminals displaced from each other in a draw direction of the voltage detection lines.

5. A voltage detection device comprising:
a holding body;
a plurality of voltage detection terminals held by the holding body; and
a plurality of voltage detection lines electrically connected to the plurality of voltage detection terminals, wherein
at least two voltage detection lines are drawn through regions on opposite sides of the holding body.

6. The voltage detection device according to claim 5, wherein
the holding body defines a space for the voltage detection line to pass through the holding body between regions on opposite sides of the holding body.

7. A battery module comprising:
a plurality of battery cells; and
the voltage detection device according to any one of claims 1 to 6 to detect voltage of the plurality of battery cells.
